# EUROPÄISCHE PATENTSCHRIFT

(11) **EP 1 464 213 B1**
(45) Veröffentlichungstag und Bekanntmachung des Hinweises auf die Patenterteilung: **11.06.2008**
(21) Anmeldenummer: 04006643.3
(22) Anmeldetag: 19.03.2004
(51) Int. Cl.: A01B 61/04

(54) **Überlastsicherheitseinrichtung für Bodenbearbeitungsgerät**
Overload protection device für a soil working implement
Dispositif de protection contre surcharge pour une machine de travail du sol

(30) Priorität: 25.03.2003 DE 10313177
(43) Veröffentlichungstag der Anmeldung: 06.10.2004
(73) Patentinhaber: Amazonen-Werke H. Dreyer GmbH & Co. KG, 49205 Hasbergen (DE)
(72) Erfinder: Schomäker, Wilfried, 26160 Bad Zwischenahn (DE)

(56) Entgegenhaltungen:
- EP-A1- 0 229 484
- DE-A1- 2 226 449
- FR-A- 2 670 358
- FR-A1- 2 386 238
- GB-A- 2 053 635

## Beschreibung

Die Erfindung betrifft eine Überlastsicherheitseinrichtung für Bodenbearbeitungsgeräte gemäß des Oberbegriffes des Patentanspruches 1.

Eine derartige Überlastsicherheitseinrichtung ist durch die GB 20 53 635 A bekannt.

Weitere Überlastsicherheitseinrichtungen sind beispielsweise in der DE 29 24 088 B2 beschrieben. Bei dieser Überlastsicherheitseinrichtung ist das Zugelement, welches mit dem Federelement verbunden ist und die beiden Gelenkteile zusammenhält als nicht biegsame Zugstange ausgebildet. Um bei dieser Ausgestaltung einen entsprechend gewünschten Kraftverlauf zu erreichen, ist eine aufwendige Anlenkung des Zugelementes an den Gelenkteilen erforderlich.

Der Erfindung liegt die Aufgabe zugrunde, eine einfache Anordnung und Ausbildung der Federbelastungseinrichtung zu schaffen.

Dieses wird durch die kennzeichnenden Merkmale des Anspruches 1 erreicht. Infolge dieser Maßnahmen kann mittels eines biegsamen Zugelementes der Hebelarm entsprechend den Vorgagen aufrechterhalten werden. Aufgrund der biegsamen Ausgestaltung des Zugelementes kann eine degressive Bodenbearbeitungselementkraftkennlinie und damit eine hohe Start- und Auslösekraft und eine anschließend abnehmende Kraft bei zunehmender Auslenkung des Bodenbearbeitungselementes erreicht werden. Gleichzeitig ergibt sich ein kleines Federvolumen bei einer größtmöglichen Kraft. Aufgrund des biegsamen Elementes ist es nicht erforderlich, mittels aufwendiger Kniehebelkonstruktionen, die viele Drehpunkte und Bolzen aufweisen, eine entsprechend degressive Bodenbearbeitungselementkraftkennlinie zu erreichen.

Mittels des biegsamen Zugelementes kann in einfacher Weise der wirksame Hebelarm eingestellt werden, um so die gewünschte als Scharkraftkennlinie bezeichnete Bodenbearbeitungselementkraftlinienverlauf zu erreichen.

Auch ergibt sich so eine vorteilhafte Ausrichtung der Federbelastungseinrichtung.

Die Einstellung des wirksamen Hebelarms lässt sich in einfacher Weise bei einem vorteilhaften Bodenbearbeitungselementkraftkennlinienverlauf dadurch erreichen, dass im Bereich des Gelenkes oberhalb des gespannten Zugelementes ein Anlageelement für das Zugelement angeordnet ist. Hierdurch wird verhindert, dass bei einem derartig einfach ausgebildeten Zugelement der wirksame Hebelarm kleiner als Null wird und somit das Zugelement über den Todpunkt hinausgeht, so dass damit die Steinsicherung nicht ausgeschaltet werden kann. Vielmehr wird durch diese erfindungsgemäße Lösung die Steinsicherung aufrechterhalten und der Hebelarm bleibt ausreichend groß, um die gewünschte degressive Bodenbearbeitungselementkraftkennlinie mit einer hohen Start- und Auslösekraft zu erhalten.

Um während der normalen Arbeit das Bodenbearbeitungselement sicher in der vorgesehenen Arbeitsposition zu halten, damit die Gelenkteile sicher miteinander in Verbindung stehen, wobei gleichzeitig ein unnötiger Verschleiß dem biegsamen Zugelement vermieden werden soll, ist vorgesehen, dass in Arbeitsposition des Bodenbearbeitungswerkzeuges das Anlageelement sich im Abstand zu dem Zugelement befindet.

Eine vorteilhafte Anordnung des Elementes und des Federelementes ergibt sich dadurch, dass das Anlageelement an dem Gelenkteil befestigt ist, an dem das Zugelement und nicht das Federelement befestigt ist.

Eine weitere Lösung einer sicheren und guten Ausrichtung einer Überlastsicherheitseinrichtung wird durch die Merkmale des Patentanspruches 8 gelöst.

In einer Ausgestaltung ist vorgesehen, dass das Zugelement als Zugseil ausgebildet ist. Hierdurch ergibt sich eine einfache und preiswerte Ausgestaltung des Zugelementes.

Ein biegsames Zugelement kann jedoch auch als Kette ausgebildet sein.

Weiterhin ist es möglich, dass das Zugelement aus zumindest zwei mittels Gelenk miteinander verbundenen Teilen so auszubilden, dass sich zumindest ein Gelenk unterhalb des Abstützelementes befindet. Hierdurch wird die gleiche vorteilhafte Ausgestaltung wie mit einem Zugseil oder Kette erreicht.

Weitere Einzelheiten der Erfindung sind der Beispielbeschreibung und den Zeichnungen zu entnehmen. Hierbei zeigen
- Fig. 1: das als Grubber ausgebildete Bodenbearbeitungsgerät mit den die erfindungsgemäße Steinsicherung aufweisenden Bodenbearbeitungselementen,
- Fig. 2: das Bodenbearbeitungselement in Arbeitsstellung in perspektivischer Ansicht,
- Fig. 3: das Bodenbearbeitungselement in Arbeitsstellung in Seitenansicht,
- Fig. 4: das Bodenbearbeitungselement in Arbeitsstellung im Schnitt und in Arbeitsstellung,
- Fig. 5: das ausgelenkte Bodenbearbeitungselement in perspektivischer Darstellung
- Fig. 6: das ausgelenkte Bodenbearbeitungselement in Seitenansicht,
- Fig. 7: das ausgelenkte Bodenbearbeitungselement im Schnitt und
- Fig. 8: das Federdiagramm der Steinsicherung des Bodenbearbeitungselementes.

Das Bodenbearbeitungsgerät 1 ist als Grubber ausgebildet weist den als Traggestell ausgebildeten Grundrahmen 2 mit den parallel zueinander angeordneten Querträger 3 auf. Auf der Vorderseite des Rahmens 2 ist der Dreipunktanbaubock 4 angeordnet, während auf der Rückseite die Bodenbearbeitungswerkzeuge 5 oder -elemente, des Bodenbearbeitungsgerätes 1 in der Tiefe führende Bodenwalze 6 angeordnet ist. An den Querträgern 3 sind mittels Befestigungselemente 7 die die Steinsicherung 8 aufweisende Bodenbearbeitungswerkzeuge 5 angeordnet. Jedes Bodenbearbeitungswerkzeug 5 ist mit dem Traggestell 2 über ein Gelenk 9 verbunden, das aus zwei durch Federbelastung zusammengehaltene und sich gegenseitig abstützende Gelenkteile 10 und 11 besteht. Eines dieser Gelenkteile 10 ist am Bodenbearbeitungswerkzeug 9 und das andere Gelenkteil 11 am Querträger 3 des Traggestelles 2 befestigt. An beiden Gelenkteilen 10 und 11 sind als Abstützelemente 12 dienende Kugeln 13 und Pfannen 14 im radialen Abstand von der Gelenkmitte 15 und in Umfangsrichtung verteilt angeordnet. Im Ausführungsbeispiel sind die Kugeln 13 dem Gelenkteil 11, welche dem Traggestell 2 zugeordnet angeordnet ist, während die Pfannen an dem Gelenkteil 10, welches dem Bodenbearbeitungswerkzeug 5 zugeordnet ist, angeordnet sind.

Das Bodenbearbeitungswerkzeug 5 weist das Bearbeitungsteil 16, des an einem nach oben ragenden Halter 17 befestigt ist, auf. Dieser Halter 17 ist an einem Zwischenstück 18 befestigt, welches im oberen Bereich eine rohrförmige Hülse 19 aufweist. In dieser rohrförmigen Hülse 19 ist das Federelement 20 angeordnet. Auf der Rückseite des Federelementes 20, welches als Druckfeder ausgebildet ist, greift über ein Abstützelement 21 das als Seil 22 ausgebildete biegsame Zugelement 23 an. Auf seiner Vorderseite ist das Seil 22 über eine Einstellschraube 24 über den Quersteg 24 mit dem vorderen Halter 25 des an dem Traggestell 2 angeordneten Gelenkteiles 11 verbunden. Die Druckfeder 20 liegt an dem Gelenkteil 10 an. Auf der Rückseite der Hülse 19 ist an dieser ein Abdeckelement 27 befestigt, um zu verhindern, falls das Zugelement 23 reist das Teile aufgrund der plötzlichen Entspannung der Feder 20 weggeschleudert werden kann.

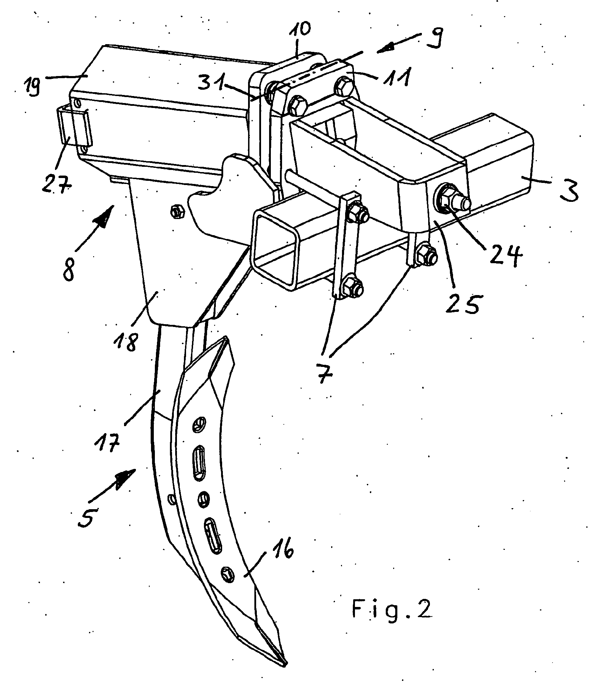

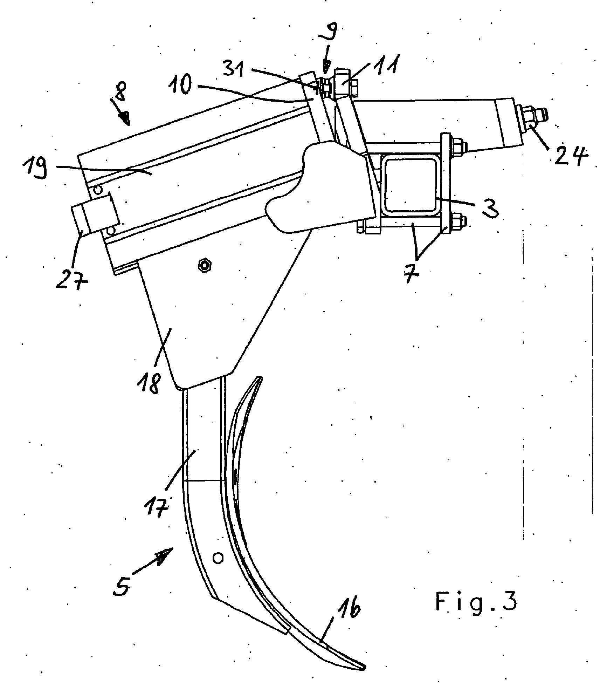

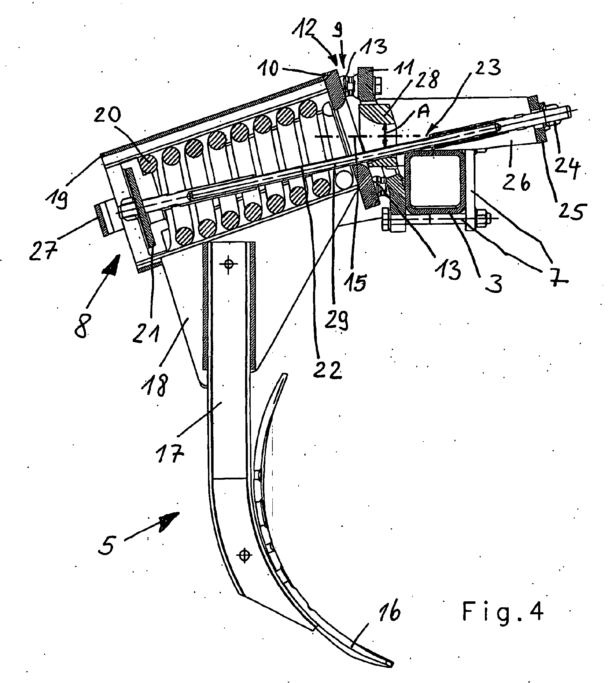

Oberhalb des gespannten Zugelementes 23 ist ein Anlageelement 28 an dem Gelenkteil 11, welches dem Traggestell 2 zugeordnet ist, für das Zugelement 23 angeordnet. In Arbeitsposition des Bodenbearbeitungselementes 5, wie in den Fig. 2 bis 4 dargestellt befindet sich das Anlageelement 28 im Abstand A zu dem Zugelement 23. Das Anlageelement 28 ist an dem Gelenkteil 11 befestigt, an dem das Zugelement 23 und nicht das Federelement 20 befestigt ist. Die Zugrichtungsgerade 29 der aus Feder 20 und Zugelement 23 bestehenden Federbelastungseinrichtung 30 verläuft unterhalb der Mittelebene der Gelenkteile 10 und 11. Dies bedeutet, das die Angriffslinie der Federbelastungseinrichtung 20 unterhalb der Mittelebene der Gelenkteile 10 und 11 verläuft. Hierdurch wird ein größerer wirksamer Hebelarm für die Federbelasteinrichtung 20 vor allem in der Arbeitsposition erreicht.

Es ist auch möglich, dass Zugelement 23 als Kette oder als aus zumindest zwei mittels Gelenk miteinander verbundenen Teile bestehenden Element auszubilden. Hierbei befindet sich dann das Gelenk unterhalb des Anlage- oder Abstützelementes 28 um die gleiche Wirkung wie ein Seil 22 zu erreichen.

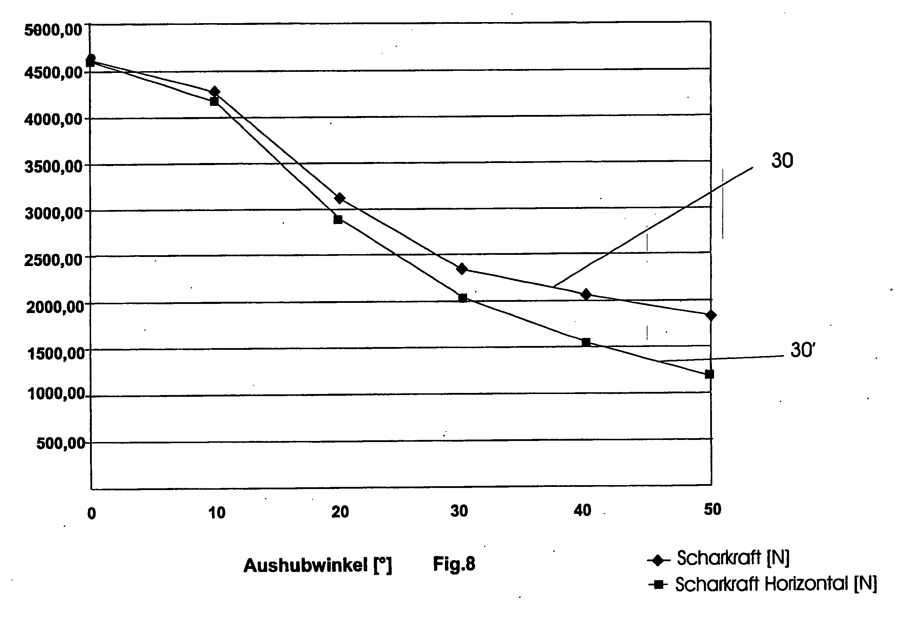

Aufgrund der Anordnung des Zugelementes 23 und des Anlageelementes 28 ergibt sich die in Fig. 8 dargestellte Bodenbearbeitungselementkraftkennlinie 30, die eine hohe Auslöse- bzw. Startkraft aufweist und eine anschließend degressiv abnehmende Kraft bei größer werdender Auslenkung des Bodenbearbeitungselementes aufweist.

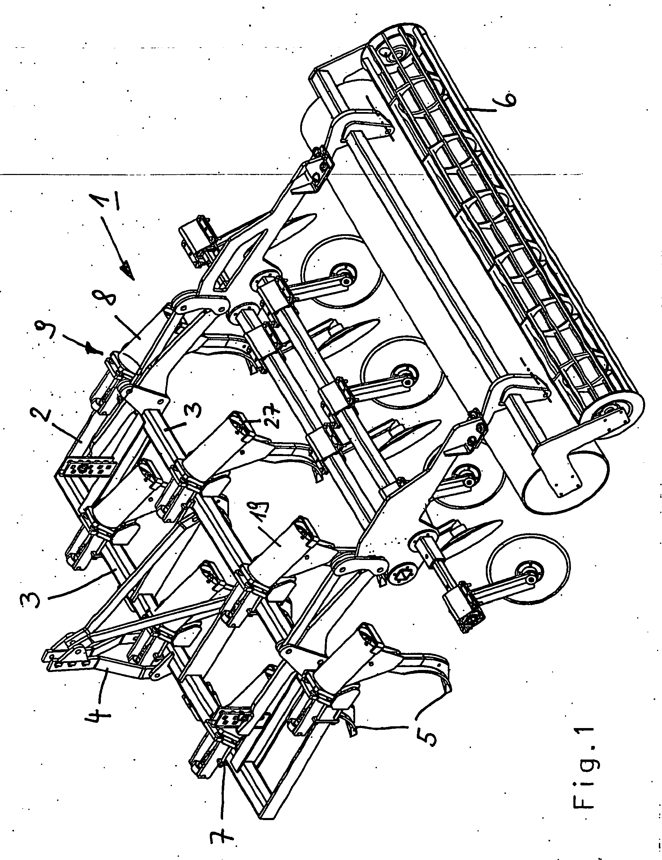

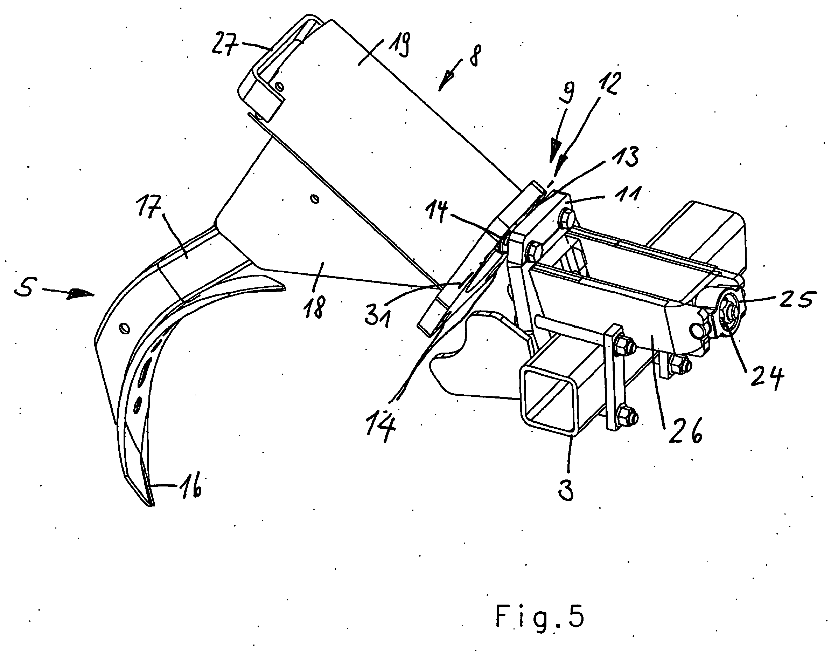

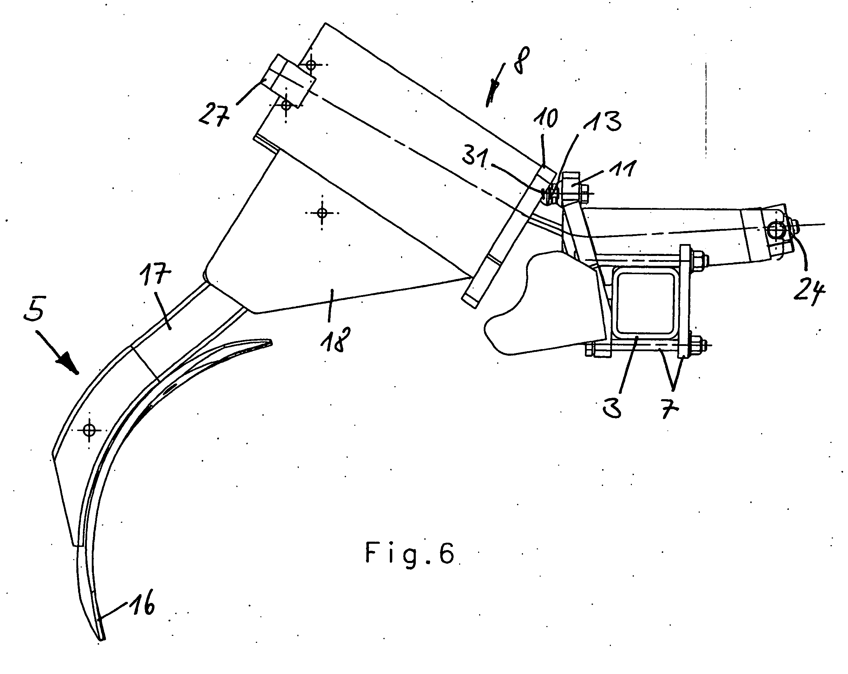

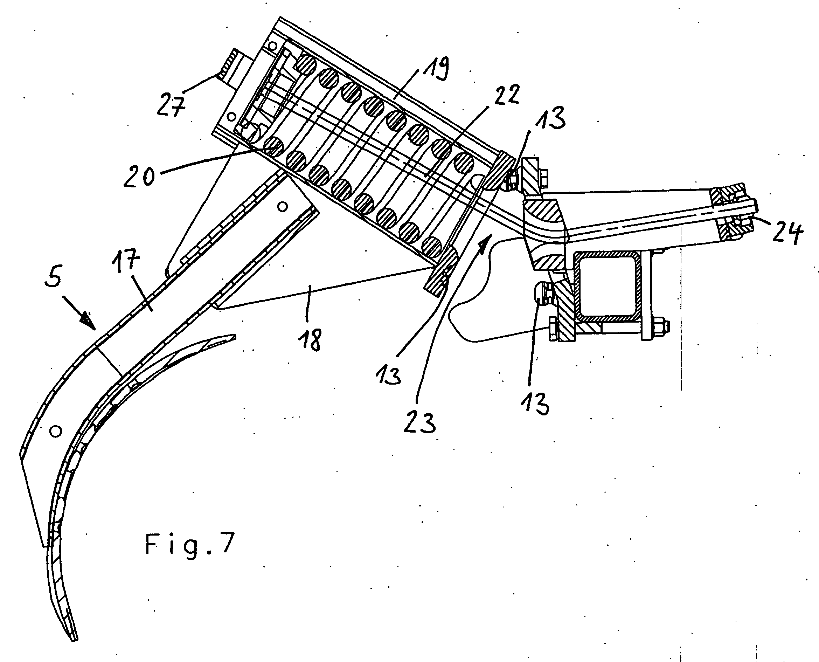

Wenn das Bodenbearbeitungswerkzeug 5 auf im Boden festsitzende Steine oder andere Elemente auftrifft, schwenkt das Bodenbearbeitungswerkzeug 5, wie in den Fig. 5 bis 7 gezeigt um die durch die beiden oberen Abstützelemente 12' verlaufende Schwenkachse 31, gegen die Kraft der Feder 20 der Steinsicherung 8 nach hinten. Nach einem bestimmten Ausschwenkweg des Bodenbearbeitungswerkzeuges 5 nach hinten oben kommt das als Seil 22 ausgebildete Zugelement 23 an dem Anlageelement 28 zur Anlage und verhindert hierdurch das die Federbelastungseinrichtung 20 über den Todpunkt schwenkt und hierbei die Steinsicherung 8 außer Funktion setzen würde. Vielmehr wird hierdurch die wirksame Federkraft des Federelementes 20 aufrecht erhalten, so dass der in Fig. 8 dargestellte Kraftverlauf an der Scharspitze des Bodenbearbeitungselementes 5 erhalten wird. Nach überwinden des im Boden festsitzenden Hindernisses wird das Bodenbearbeitungswerkzeug 5 durch das Zugelement 23 und die hierauf wirkende Federkraft wieder in die in den Fig. 1 bis 4 dargestellte Position zurückgebracht.

## Patentansprüche

1. Überlastsicherheitseinrichtung für Bodenbearbeitungsgeräte (1) mit einem das Bodenbearbeitungswerkzeug (5) mit dem Traggestell (2) verbindenden Gelenk (9), das aus zwei durch Federbelastung zusammengehaltenen und sich gegenseitig abstützenden Gelenkteilen (10, 11) besteht, von denen das eine am Bodenbearbeitungswerkzeug (5) und das andere am Traggestell (2) befestigt sind, wobei an beiden Gelenkteilen (10, 11) zumindest drei als Abstützelemente (12) dienende Kugel (13) und Pfannen (14) im radialen Abstand von der Gelenkmitte (15) und in Umfangsrichtung verteilt angeordnet sind, wobei die Federbelastungseinrichtung (20) zumindest ein Federelement und ein mit dem Federelement verbundenes Zugelement aufweist, **dadurch gekennzeichnet, dass** das Zugelement (22) biegsam ausgebildet ist, dass die Zugrichtungsgerade (23) der Federbelastungseinrichtung (20) im Bereich der Gelenkmitte (15) unterhalb der Mittelebene des Gelenkteiles (11,12) verläuft.

2. Überlastsicherung nach Anspruch 1, **dadurch gekennzeichnet, dass** im Bereich des Gelenkes (9) oberhalb des gespannten Zugelementes (22) ein Anlageelement (28) für das Zugelement (22) angeordnet ist.

3. Überlastsicherheitseinrichtung nach Anspruch 2, **dadurch gekennzeichnet, dass** in Arbeitsposition des Bodenbearbeitungswerkzeuges das Anlageelement (28) sich im Abstand (A) zu dem Zugelement (22) befindet.

4. Überlastsicherheitseinrichtung nach Anspruch 2, **dadurch gekennzeichnet, dass** das Anlageelement (28) an dem Gelenkteil (11) befestigt ist, an dem das Zugelement (22) und nicht das Federelement (20) befestigt ist.

5. Überlastsicherheitseinrichtung nach einem oder mehren der vorstehenden Ansprüche, **dadurch gekennzeichnet, dass** das Zugelement (22) als Zugseil ausgebildet ist.

6. Überlastsicherheitseinrichtung nach einem oder mehreren der vorstehenden Ansprüche 1 bis 4, **dadurch gekennzeichnet, dass** das Zugelement als Kette ausgebildet ist.

7. Überlastsicherheitseinrichtung nach einem oder mehreren der vorstehenden Ansprüche 1 bis 6, **dadurch gekennzeichnet, dass** das Zugelement aus zumindest zwei mittels Gelenk miteinander verbunden Teilen so angeordnet sind, dass sich zumindest ein Gelenk unterhalb des Abstützelementes befindet.

## Claims

1. Overload protection mechanism for ground cultivating devices (1) including a pivot joint (9) that connects the ground cultivating tool (5) to the supporting frame (2), the said pivot joint comprising two pivot joint parts (10, 11), which are held together by spring loading and support each other, one of the said pivot joint parts being secured to the ground cultivating tool (5) and the other to the supporting frame (2), wherein at least three balls (13) and sockets (14) serving as support elements (12) are disposed on the two pivot joints (10, 11) at a radial distance from the pivot joint centre (15), distributed in the circumferential direction, wherein the spring loading device (20) includes at least one spring element and one tensile element that is connected to the said spring element, **characterised in that** the tensile element (22) is flexible, **in that** the straight line (23) of the direction of tension of the spring loading device (20) extends in the region of the pivot joint centre (15) below the central plane of the pivot joint part (11, 12).

2. Overload protection according to claim 1, **characterised in that** a stop element (28) for the tensile element (22) is disposed in the region of the pivot joint (9) above the tensioned tensile element (22).

3. Overload protection mechanism according to claim 2, **characterised in that** with the ground cultivating device in the operating position, the stop element (28) is situated at a distance (A) from the tensile element (22).

4. Overload protection mechanism according to claim 2, **characterised in that** the stop element (28) is secured to the pivot joint part (11), to which the tensile element (22) and not the spring element (20) is secured.

5. Overload protection mechanism according to one or more of the preceding claims, **characterised in that** the tensile element (22) is a traction rope.

6. Overload protection mechanism according to one or more of the preceding claims 1 to 4, **characterised in that** the tensile element is a chain.

7. Overload protection mechanism according to one or more of the preceding claims 1 to 6, **characterised in that** the tensile element is produced from at least two parts that are interconnected by means of a pivot joint and disposed such that at least one pivot joint is situated below the support element.

## Revendications

1. Installation de protection contre la surcharge d'une machine pour le travail du sol (1) comportant une articulation (9) reliant l'outil de travail du sol (5) à un châssis (2), formée de deux parties d'articulation (10, 11) maintenues réunies par la contrainte d'un ressort et s'appuyant réciproquement l'une contre l'autre,
l'une de ces parties étant fixée à l'outil de travail du sol (5) et l'autre partie étant fixée au châssis (2),
les deux parties d'articulation (10, 11) comportant au moins trois éléments à bille (13) et coupelle (14), servant d'éléments d'appui (12), radialement écartés du centre (15) de l'articulation en étant répartis dans la direction périphérique,
l'installation de mise en charge par ressort (20) ayant au moins un élément de ressort et un élément de traction relié à l'élément de ressort,
**caractérisée en ce que**
l'élément de traction (22) est flexible,
la droite de direction de traction (23) de l'installation de mise en charge par ressort (20) étant située dans la zone du milieu de l'articulation (15) sous le plan médian de la pièce d'articulation (11, 12).

2. Installation de protection contre une surcharge selon la revendication 1,
**caractérisée par**
un élément d'appui (28) pour l'élément de traction (22) dans la région de l'articulation (9) au-dessus de l'élément de traction (22) mis en tension.

3. Installation de protection contre une surcharge selon la revendication 2,
**caractérisée en ce que**
lorsque l'outil de travail du sol est en position active, l'élément d'appui (28) se trouve à la distance (A) de l'élément de traction (22).

4. Installation de protection contre une surcharge selon la revendication 2,
**caractérisée en ce que**
l'élément d'appui (28) est fixé à la partie d'articulation (11) à laquelle est fixé l'élément de traction (22) et non pas l'élément de ressort (20),

5. Installation de protection contre une surcharge selon l'une ou plusieurs des revendications précédentes,
**caractérisée en ce que**
l'élément de traction (22) est un câble de traction.

6. Installation de protection contre une surcharge selon l'une ou plusieurs des revendications précédentes 1 à 4,
**caractérisée en ce que**
l'élément de traction est une chaîne.

7. Installation de protection contre une surcharge selon l'une ou plusieurs des revendications précédentes 1 à 6,
**caractérisée en ce que**
l'élément de traction se compose d'au moins deux pièces articulées l'une à l'autre, de façon qu'au moins une articulation se trouve sous l'élément d'appui.
